# EUROPÄISCHE PATENTSCHRIFT

(11) **EP 2 133 717 B1**
(45) Veröffentlichungstag und Bekanntmachung des Hinweises auf die Patenterteilung: **23.04.2014**
(21) Anmeldenummer: 09006781.0
(22) Anmeldetag: 20.05.2009
(51) Int. Cl.: G02B 6/38

(54) **Gehäuse für Lichtwellenleiter-Ferrule**
Housing for fibre optic cable ferrule
Boîtier pour férule à guide optique

(30) Priorität: 23.05.2008 DE 202008006934 U
(43) Veröffentlichungstag der Anmeldung: 16.12.2009
(73) Patentinhaber: HARTING Electronics GmbH, 32339 Espelkamp (DE)
(72) Erfinder: Hoffmann, Rita, 32369 Rahden (DE)
(74) Vertreter: Prinz & Partner

(56) Entgegenhaltungen:
- DE-A1- 3 442 056
- FR-A- 2 776 844
- GB-A- 2 295 731
- US-A- 4 046 452
- US-A- 4 797 123

## Beschreibung

Die Erfindung betrifft ein Gehäuse für eine Lichtwellenleiter-Ferrule. Die Erfindung betrifft außerdem ein Steckergehäuse mit einer Aufnahme für mehrere Gehäuse einer Lichtwellenleiter-Ferrule.

Das Gehäuse wird insbesondere bei einem optischen Steckverbinder verwendet, der es ermöglicht, einen oder mehrere Lichtwellenleiter mit einem zugeordneten Bauteil zu koppeln, beispielsweise einem optoelektronischen Wandler oder einem weiteren Lichtwellenleiter. Der zu koppelnde Lichtwellenleiter wird an seinem Ende mit einer Ferrule versehen, meist aus Keramik oder Metall, die in dem Gehäuse präzise aufgenommen wird. Das Gehäuse wird dann in dem Steckergehäuse angeordnet, das in ein zugeordnetes Steckverbindergehäuse eingesetzt werden kann.

In gleicher Weise wie bei elektrischen Steckverbindungen können bei optischen Steckverbindungen eine Vielzahl von Verbindungen gleichzeitig hergestellt werden. Zu diesem Zweck können im Steckergehäuse mehrere Lichtwellenleiter in einer Reihe angeordnet werden, und es können mehrere Reihen von Lichtwellenleitern übereinander angeordnet werden. Eine wesentliche Aufgabe der die Lichtwellenleiter-Ferrulen aufnehmenden Gehäuse innerhalb des Steckergehäuses besteht darin, präzise den Abstand der Lichtwellenleiter untereinander zu bestimmen. Nur wenn ein präziser Abstand der Lichtwellenleiter voneinander, genauer gesagt der Stirnflächen der Lichtwellenleiter, gewährleistet ist, ist eine verlustarme optische Kopplung mit dem zugeordneten Bauteil möglich. Dabei werden bei unterschiedlichen Anwendungen unterschiedliche Rastermaße verwendet, also unterschiedliche Abstände der Stirnflächen der Lichtwellenleiter voneinander. Dementsprechend war eine hohe Anzahl von unterschiedlichen Gehäusen erforderlich.

FR 2 776 844 A3, US 4,797,123, GB 2 295 731 A, US 4,046,452 und DE 34 42 056 A1 offenbaren modulare Steckergehäuse, bei denen die einzelnen Module über Schwalbenschwanzverbindungen zusammengesteckt werden können. Eine Veränderung der Abstände der einzelnen Module bzw. der in ihnen aufgenommenen Kontakte zueinander ist in den genannten Druckschriften nicht vorgesehen.

Die Aufgabe der Erfindung besteht darin, ein Gehäuse zu schaffen, welches mit geringem Aufwand ermöglicht, unterschiedliche Rastermaße zu erzielen.

Zur Lösung dieser Aufgabe ist erfindungsgemäß ein Gehäuse für eine Lichtwellenleiter-Ferrule gemäß Anspruch 1 vorgesehen, mit ersten Distanzmitteln, die für den Abstand zwischen zwei benachbart angeordneten Gehäusen bestimmend sind und durch Gestaltungen des Gehäuses gebildet sind, die einander bezüglich einer Mittelachse des Gehäuses bzw. der im Gehäuse angeordneten Lichtwellenleiter-Ferrule gegenüberliegen, wobei die ersten Distanzmittel gebildet sind durch ein Paar von ersten Distanzmittein eines ersten Typs und eines zweiten Typs, der sich vom ersten Typ unterscheidet. Die Erfindung beruht auf dem Grundgedanken, allein durch die unterschiedliche Anordnung von zwei Gehäusen im Steckergehäuse einen unterschiedlichen Abstand der Mittelachsen des Gehäuses bzw. der darin angeordneten Lichtwellenleiter-Ferrulen voneinander zu erhalten. Somit kann ein und dasselbe Gehäuse bei Steckverbindungen mit unterschiedlichen Rastermaßen eingesetzt werden. Aufgrund der damit möglichen höheren Stückzahlen ergeben sich niedrigere Herstellungskosten. Das Gehäuse weist mehrere Paare des ersten Distanzmittels auf, die abwechselnd ausgerichtet entlang der Längsachse aufeinanderfolgen.

Gemäß einer Ausführungsform der Erfindung ist vorgesehen, dass die ersten Distanzmittel des ersten Typs und des zweiten Typs gebildet sind durch Abschnitte des Gehäuses, die einen unterschiedlichen Abstand von der Mittelachse des Gehäuses haben. Dies ermöglicht, das bei nebeneinanderliegenden Gehäusen erzielte Rastermaß einfach dadurch zu ändern, dass die Gehäuse mit unterschiedlicher Orientierung zueinander angeordnet werden.

Gemäß einer Ausführungsform der Erfindung ist vorgesehen, dass die ersten Distanzmittel des ersten Typs durch eine Abstützfläche und die ersten Distanzmittel des zweiten Typs durch eine Ausnehmung gebildet sind. Unter einer Ausnehmung wird hier eine Vertiefung in einer durch die benachbarte Struktur bestimmten Fläche verstanden und unabhängig davon, ob die Ausnehmung einen Boden aufweist, wie dies beispielsweise bei einer Nut der Fall ist, oder keinen Boden, wie dies beispielsweise bei einem Ausschnitt in einer Wand der Fall ist. Diese Gestaltung der Distanzmittel ermöglicht, die unterschiedlichen Typen von Distanzmitteln mit geringem Aufwand herzustellen. Außerdem können bei dieser Gestaltung die Gehäuse in einem Abstand voneinander angeordnet werden, der kleiner ist als die Breite der Gehäuse. Dies ist darauf zurückzuführen, dass die Abstützfläche des einen Gehäuses in der Ausnehmung des benachbarten Gehäuses aufgenommen werden kann.

Dabei kann vorgesehen sein, dass die ersten Distanzmittel des ersten Typs gebildet sind durch einen Steg, der zwei Seitenteile des Gehäuses miteinander verbindet, und dass die ersten Distanzmittel des zweiten Typs gebildet sind durch eine Ausnehmung zwischen zwei Stegen, welche die beiden Seitenteile miteinander verbinden. Auf diese Weise ergibt sich eine besonders kompakte Gestaltung.

Gemäß einer bevorzugten Ausführungsform sind zweite Distanzmittel vorgesehen, die bezüglich der Mittelachse in Umfangsrichtung gegenüber den ersten Distanzmitteln versetzt sind, wobei die zweiten Distanzmittel gebildet sind durch ein Paar zweiter Distanzmittel eines ersten Typs und eines zweiten Typs, der sich vom ersten Typ unterscheidet. Durch die Verwendung der zweiten Distanzmittel können mit ein und demselben Gehäuse noch mehr unterschiedliche Rastermaße realisiert werden.

Gemäß einer Ausführungsform ist vorgesehen, dass das Gehäuse mit einem Verriegelungselement versehen ist, das eine Lichtwellenleiter-Ferrule und eine Druckfeder im Gehäuse verriegeln kann. Das Verriegelungselement kann einfach von außen an das Gehäuse angesetzt werden, so dass die Montage der Lichtwellenleiter-Ferrule im Gehäuse mit minimalem Aufwand möglich ist.

Vorzugsweise ist vorgesehen, dass das Verriegelungselement mindestens einen Rastring aufweist, der hinter einem Steg des Gehäuses einrasten kann. Bei dieser Gestaltung rastet das Verriegelungselement von alleine im Gehäuse ein, wenn es in dieses hineingedrückt wird. Dies führt zu einem minimalen Montageaufwand.

Vorzugsweise ist vorgesehen, dass das Gehäuse aus Kunststoff besteht. Dies ermöglicht, das Gehäuse mit den Distanzmitteln kostengünstig beispielsweise im Spritzgussverfahren herstellen zu können. Weiterhin lässt sich auf diese Weise mit geringem Aufwand die nötige Präzision erreichen.

Erfindungsgemäß ist auch ein Steckergehäuse mit einer Aufnahme für mehrere Gehäuse vorgesehen, wobei die Gehäuse in dem Steckergehäuse aneinander anliegend aufgenommen sind. In Abhängigkeit von der Ausrichtung der Gehäuse relativ zueinander innerhalb des Steckergehäuses lassen sich mit dem Steckergehäuse bei geringem Aufwand unterschiedliche Rastermaße realisieren.

Die Erfindung wird nachfolgend anhand verschiedener Ausführungsformen beschrieben, die in den beigefügten Zeichnungen beschrieben sind. In diesen zeigen:
- Figur 1 in einer perspektivischen Explosionsansicht ein Gehäuse mit Lichtwellenleiter-Ferrule gemäß einer ersten Ausführungsform;
- Figur 2 in einer perspektivischen Ansicht zwei Gehäuse der ersten Ausführungsform, angeordnet in einem ersten Rastermaß;
- Figur 3 in einer perspektivischen Ansicht mehrere Gehäuse gemäß der ersten Ausführungsform, angeordnet in einem zweiten Rastermaß;
- Figur 4 eine auseinandergezogene Darstellung der Gehäuse von Figur 3;
- Figur 5 in einer perspektivischen Explosionsansicht ein Gehäuse mit Lichtwellenleiter-Ferrule gemäß einer zweiten Ausführungsform;
- Figur 6 in einer perspektivischen Ansicht das Gehäuse von Figur 5, in dem eine Lichtwellenleiter-Ferrule montiert ist;
- Figur 7 in einer perspektivischen Ansicht mehrere Gehäuse gemäß der zweiten Ausführungsform, angeordnet in einem ersten Rastermaß;
- Figur 8 in einer perspektivischen Ansicht mehrere Gehäuse gemäß der zweiten Ausführungsform nebeneinanderliegend, angeordnet in einem zweiten Rastermaß;
- Figur 9 in einer perspektivischen Ansicht mehrere Gehäuse gemäß der zweiten Ausführungsform nebeneinanderliegend, angeordnet in einem dritten Rastermaß;
- Figur 10 in einer perspektivischen Ansicht mehrere Gehäuse gemäß der zweiten Ausführungsform nebeneinanderliegend, angeordnet in einem vierten Rastermaß;
- Figur 11 ein Paket von Gehäusen gemäß der zweiten Ausführungsform, die in einem ersten und einem dritten Rastermaß angeordnet sind; und
- Figur 12 eine schematische Vorderansicht eines Gehäuses gemäß der zweiten Ausführungsform.

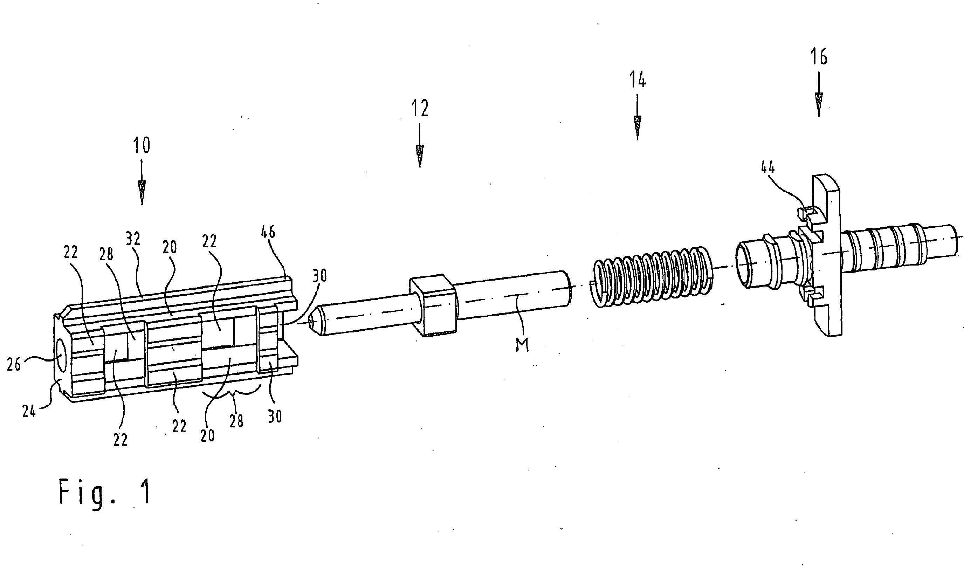

In Figur 1 ist ein Gehäuse 10 gezeigt, das zur Aufnahme einer Lichtwellenleiter-Ferrule 12 vorgesehen ist. Zur Befestigung der Lichtwellenleiter-Ferrule 12 im Gehäuse sind eine Druckfeder 14 und ein Verriegelungselement 16 vorgesehen.

Das Gehäuse 10 weist zwei wandartige Seitenteile 20 auf, die einander parallel gegenüberliegen, sowie mehrere Stege 22, welche die beiden Seitenteile 20 an deren Längsrändern miteinander verbinden und die sich im rechten Winkel zu den beiden Seitenteilen 20 erstrecken. An einer Stirnseite der Seitenteile 20 ist eine Stirnwand 24 vorgesehen, in der eine Öffnung 26 ausgebildet ist. Durch diese Öffnung steht die Lichtwellenleiter-Ferrule aus dem Gehäuse 10 nach außen hervor.

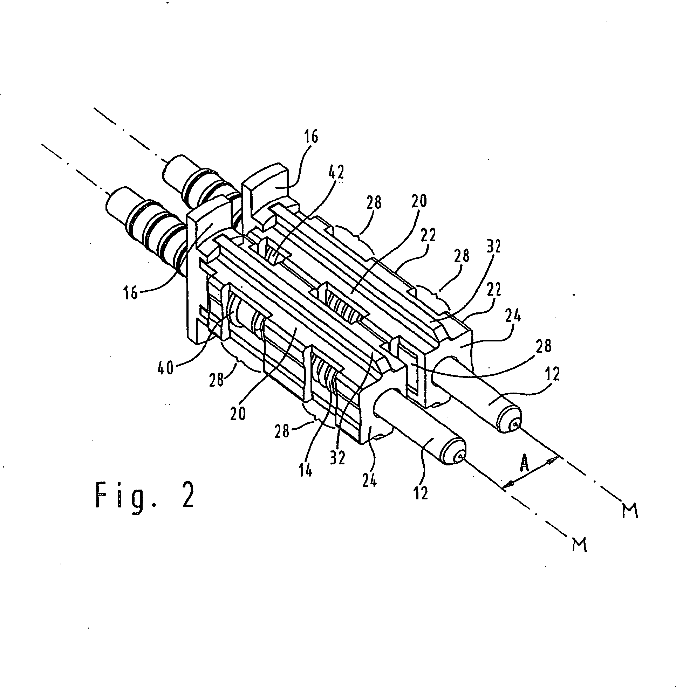

Die Stege 22 sind abwechselnd angeordnet, so dass sie einander, betrachtet entlang der Mittelachse der Lichtwellenleiter-Ferrule 12, nicht überlappen. Anders ausgedrückt gibt es auf jeder radialen Ebene der Längsachse nur einen Steg, entweder auf der "Vorderseite" oder auf der "Hinterseite", bezogen auf die Darstellung von Figur 1. Ausgehend von der Stirnwand 24 ist der erste Steg 22 auf der Vorderseite angeordnet. Auf der in Figur 2 zu sehenden "Rückseite" befindet sich angrenzend an die Stirnwand 24 kein Steg. Wieder zurück in Figur 1, ist der auf der "Rückseite" angeordnete, etwas breitere Steg 22 zu sehen, dem gegenüber auf der Vorderseite eine Ausnehmung 28 angeordnet ist. Darauf folgt wieder ein Steg 22 auf der Vorderseite, dem gegenüber eine Ausnehmung 28 auf der Rückseite liegt. Daran anschließend folgt ein weiterer Steg 22 auf der Rückseite, dem gegenüber eine Ausnehmung 28 auf der Vorderseite angeordnet ist. An dem von der Stirnwand 24 abgewandten Ende des Gehäuses 10 sind schließlich zwei kleinere Verriegelungslaschen 30 angeordnet, die in gleicher Weise wie die Stege 22 gegeneinander versetzt angeordnet sind, also einer auf der "Vorderseite" und einer versetzt dazu auf der "Rückseite".

Das Verriegelungselement 16 ist mit einem ersten Rastring 40 und einem zweiten Rastring 42 versehen, die hintereinanderliegend angeordnet sind. Der erste Rastring 40 rastet dabei hinter der mehr zur Mitte des Gehäuses hin angeordneten Verriegelungslasche 30 ein (siehe Figur 2), also der in Figur 1 auf der "Vorderseite" angeordneten Verriegelungslasche, während der zweite Rastring 42 hinter der weiter außen angeordneten Verriegelungslasche 30 einrastet, also der in Figur 1 auf der "Rückseite" angeordneten Verriegelungslasche. Zusätzlich ist das Verriegelungselement 16 mit zwei Positionierschlitzen 44 versehen, in die zwei Positionierrippen 46 eingreifen, die auf den Seitenteilen 20 des Gehäuses 10 ausgebildet sind. Die Rastringe 40, 42 sorgen dafür, dass das Verriegelungselement 16 in axialer Richtung am Gehäuse 10 einrastet, so dass die Druckfeder vorgespannt wird und die Ferrule 12 elastisch von innen gegen die Stirnwand 24 beaufschlagt wird. Die Positionierschlitze 44 und die Positionierrippen 46 gewährleisten, dass das Verriegelungselement 16 in Umfangsrichtung positioniert ist.

Die Stege 22 bzw. Verriegelungslaschen 30 zusammen mit den Ausnehmungen 28 bilden erste Distanzmittel, die für den Abstand zwischen zwei benachbart angeordneten Gehäusen bestimmend sind. Die Stege 22 können dabei als ein Distanzmittel eines ersten Typs angesehen werden, und die Ausnehmungen 28 können als erste Distanzmittel eines zweiten Typs angesehen werden. Die beiden Typen von Distanzmitteln unterscheiden sich insbesondere durch ihren Abstand von der Mittelachse des Gehäuses bzw. der Lichtwellenleiter-Ferrule 12.

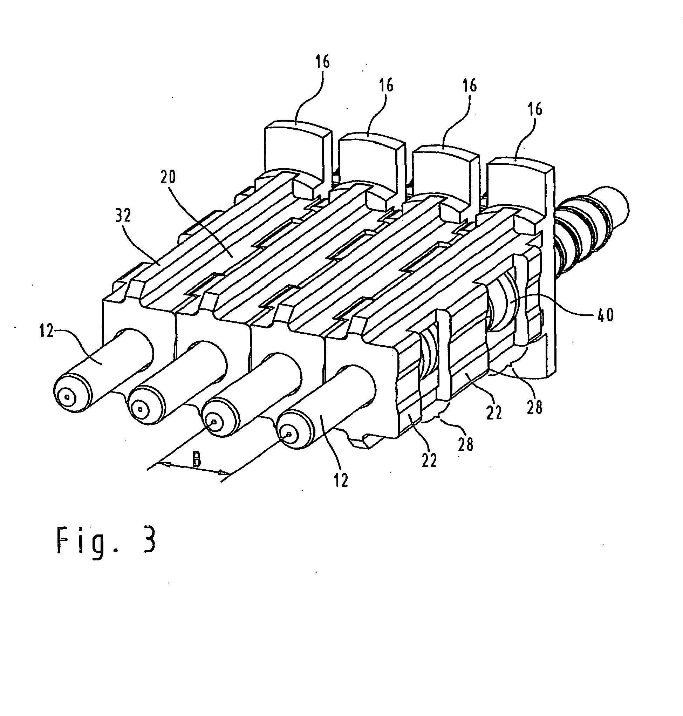

Die Wirkungsweise der ersten Distanzmittel 22, 28 wird nachfolgend anhand der Figuren 2 und 3 erläutert. In Figur 2 sind zwei Gehäuse nebeneinanderliegend gezeigt, wobei die Gehäuse in unterschiedlichen Ausrichtungen angeordnet sind. Erkennbar ist dies beispielsweise an der Ausrichtung des ersten, an die Stirnwand 24 angrenzenden Stegs 22. Bei dem in Figur 2 links gezeigten Gehäuse weist der vordere Steg 22 nach links, während er bei dem rechten Gehäuse 10 nach rechts weist. Als Konsequenz der unterschiedlichen Ausrichtung der Gehäuse 10 berühren die nebeneinanderliegenden Gehäuse einander mittels der Stege 22. Dies gilt auch für weitere (in Figur 2 nicht dargestellte) Gehäuse, die rechts und links der beiden gezeigten Gehäuse 10 angeordnet sind.

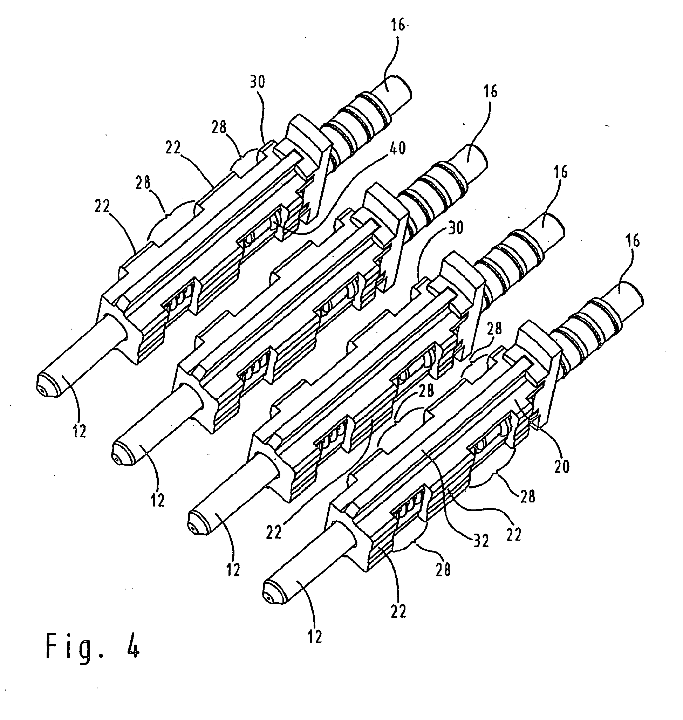

In Figur 3 sind mehrere nebeneinanderliegende Gehäuse gezeigt, wobei die Gehäuse alle dieselbe Ausrichtung haben. Wie in Figur 3 und noch besser in Figur 4 zu sehen ist, ist der erste, an die Stirnwand 24 angrenzende Steg 22 jedes Gehäuses 10 nach rechts ausgerichtet. Dies führt dazu, dass die Stege 22 bzw. Verriegelungslaschen 30 eines Gehäuses in den Ausnehmungen 28 des benachbarten Gehäuses liegen. Da die Außenseiten der Stege 22, die als Abstützflächen dienen, einen größeren Abstand von der Mittelachse des Gehäuses bzw. der Lichtwellenleiter-Ferrule 12 haben als der Außenrand der Seitenteile 20 im Bereich der Ausnehmungen 28, ergibt sich bei der in Figur 2 gezeigten, abwechselnden Ausrichtung der Gehäuse 10 ein größerer Abstand der Längsachsen voneinander als bei der in Figur 3 gezeigten, identischen Ausrichtung der Gehäuse 10. Beispielsweise kann bei der in Figur 2 gezeigten Ausrichtung ein Rastermaß von 3 mm erzielt werden, also ein Abstand A zwischen den Längsachsen der Lichtwellenleiter-Ferrulen 12, während bei der in Figur 3 gezeigten Ausrichtung ein Abstand B von 2,5 mm erzielt wird.

Ein besonderer Vorteil dieser Gestaltung der Gehäuse ist, dass ein Rastermaß erzielt werden kann, das kleiner ist als die Breite der Gehäuse. Dies ist darauf zurückzuführen, dass Teile des einen Gehäuses in den Ausnehmungen des benachbarten Gehäuses aufgenommen werden können.

Entscheidend ist, dass allein durch eine Änderung der Ausrichtung der Gehäuse, konkret hier um eine Drehung der Gehäuse um 180° um die Längsachse, ein Übergang von einem Rastermaß zum anderen erzielt wird. Die Gehäuse können dann nebeneinanderliegend in ein (hier nicht gezeigtes) Steckergehäuse eingeschoben werden, in welchem sie präzise geführt sind, beispielsweise durch Längsrippen 32.

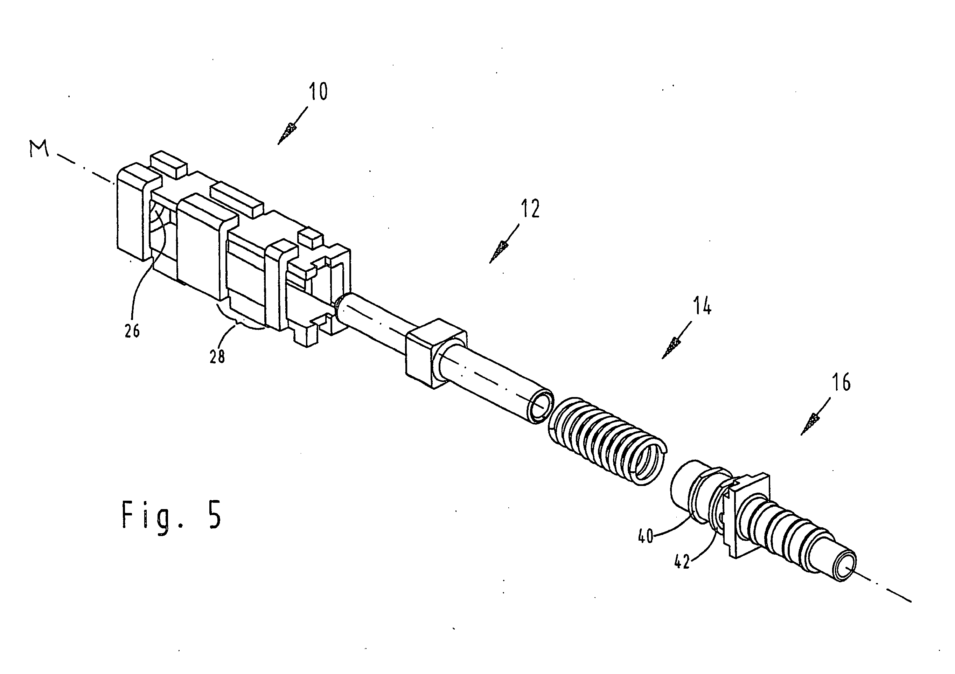

Anhand der Figuren 5 bis 12 wird nachfolgend eine zweite Ausführungsform der Gehäuse beschrieben. Für die von der ersten Ausführungsform bekannten Bauteile werden dieselben Bezugszeichen verwendet, und es wird insoweit auf die obigen Erläuterungen verwiesen.

Die Gehäuse der zweiten Ausführungsform sind dafür vorgesehen, nicht nur in einer Reihe nebeneinanderliegend angeordnet zu werden, sondern in mehreren Reihen übereinanderliegend. Zu diesem Zweck ist das Verriegelungselement 16 dahingehend modifiziert, dass es in seitlicher Richtung nicht über das entsprechende Gehäuse hinausragt.

Der wesentlichste Unterschied zwischen den Gehäusen der ersten Ausführungsform und den Gehäusen der zweiten Ausführungsform besteht darin, dass zusätzlich zu den ersten Distanzmitteln noch zweite Distanzmittel vorgesehen sind. Diese sind an den beiden Seiten des Gehäuses 10 angeordnet, die zwischen den Seiten liegen, an denen die ersten Distanzmittel 22, 28 angeordnet sind. Die zweiten Distanzmittel befinden sich also im Bereich der Seitenteile 20.

Ähnlich wie die ersten Distanzmittel des ersten und des zweiten Typs ist ein erster Typ der zweiten Distanzmittel durch eine Abstützfläche gebildet, die aufgrund von zusätzlichem Material sich in einem größeren Abstand von der Mittelachse der Lichtwellenleiter-Ferrule 12 befindet als die zweiten Distanzmittel des zweiten Typs. Konkret sind bei der zweiten Ausführungsform die zweiten Distanzmittel des ersten Typs durch Abstützblöcke 50 gebildet, die auf den Seitenteilen 20 angeordnet sind und deren Außenseite die Abstützfläche zum benachbarten Gehäuse bildet. Diesen zweiten Distanzmitteln des ersten Typs zugeordnet sind auf der gegenüberliegenden Seite des Gehäuses zweite Distanzmittel des zweiten Typs, die hier gebildet sind durch einen Bereich der Seitenteile 20. Die Abstützblöcke 50 der zweiten Distanzmittel entsprechen also den Stegen 22 der ersten Distanzmittel, und die freiliegenden Bereiche der Seitenteile 20 der zweiten Distanzmittel entsprechen den Ausnehmungen 28 der ersten Distanzmittel. Auch bei den zweiten Distanzmitteln sind die Abstützblöcke 50 bzw. die freiliegenden Abschnitte 52 der Seitenteile 20 abwechselnd angeordnet, so dass sie einander nicht überlappen.

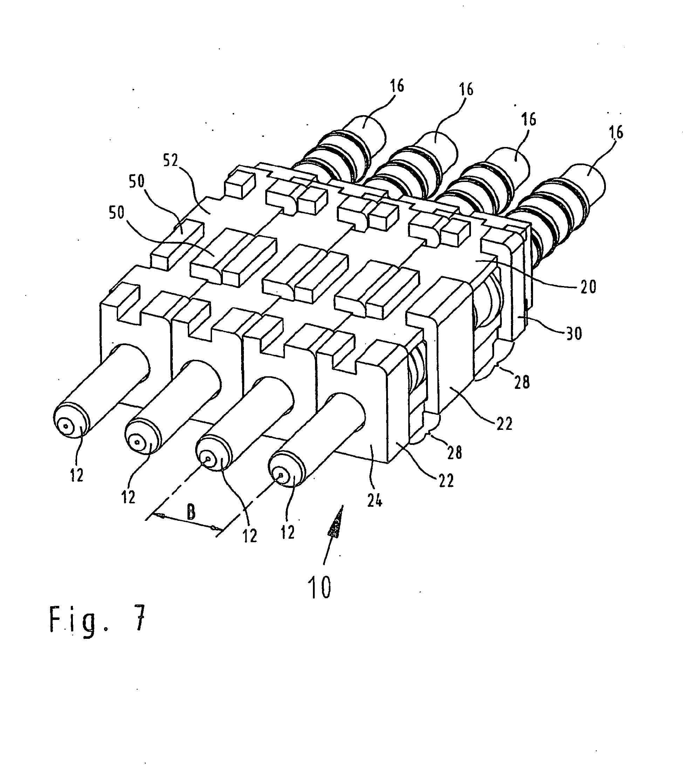

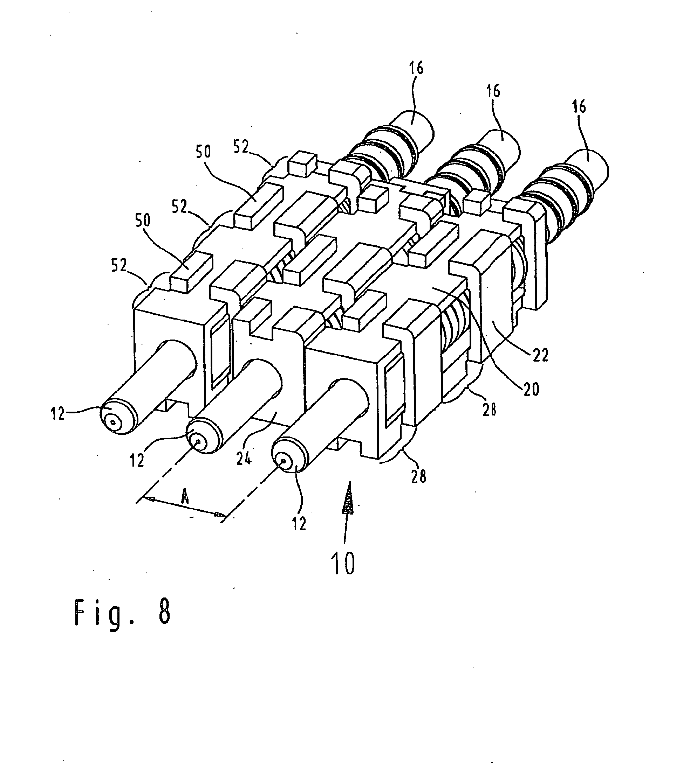

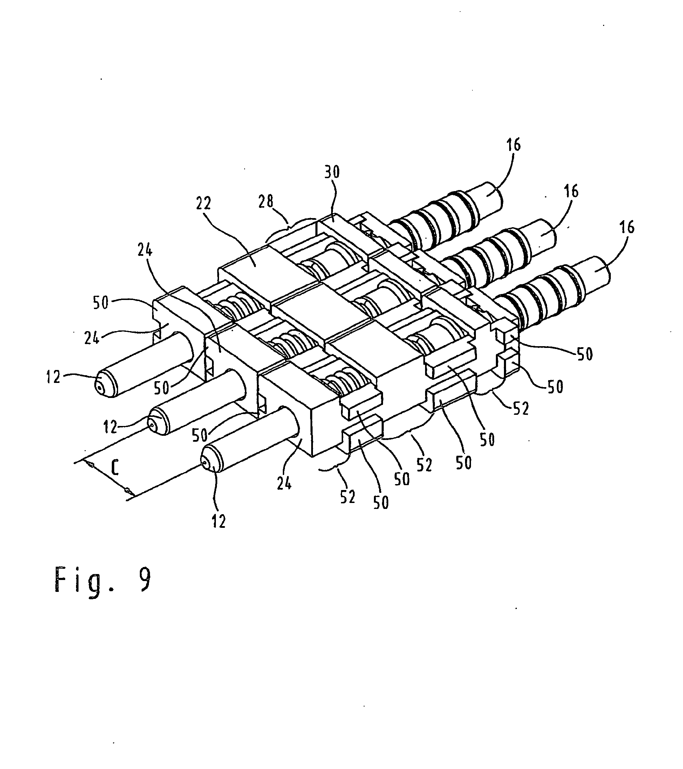

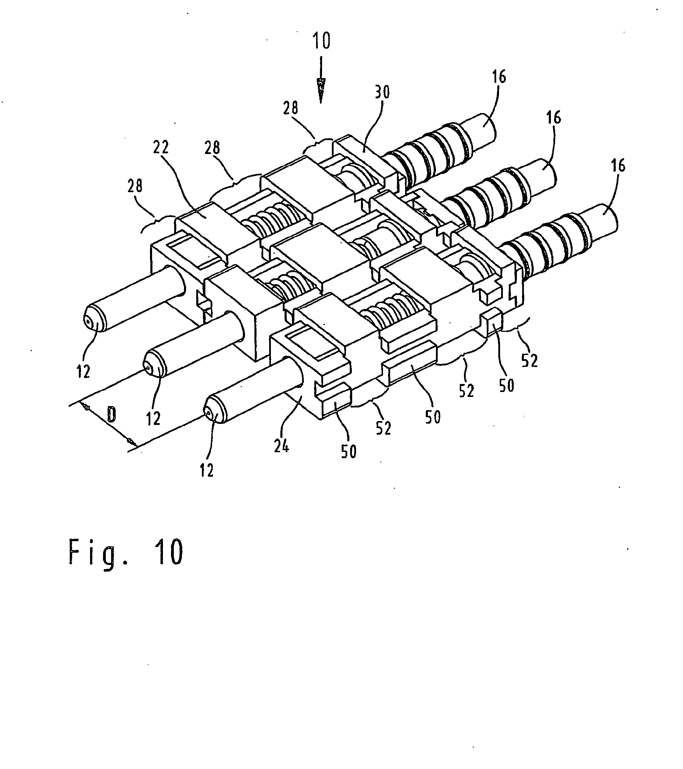

Aufgrund der ersten Distanzmittel, also der Stege 22 und der Ausnehmungen 28, können auch die Gehäuse 10 der zweiten Ausführungsform mit einem ersten Rastermaß A (siehe Figur 8) und einem zweiten Rastermaß B (siehe Figur 7) angeordnet werden. Da zusätzlich die zweiten Distanzmittel, gebildet durch die Abstützblöcke 50 und die freiliegenden Abschnitte 52 der Seitenteile 20, vorhanden sind, können die Gehäuse 10 auch noch mit einem dritten Rastermaß C (siehe Figur 9) und einem vierten Rastermaß D (siehe Figur 10) angeordnet werden. Wenn die Gehäuse 10 mit dem dritten Rastermaß C angeordnet werden, beispielsweise 3,5 mm, sind die Gehäuse bezogen auf die zweiten Distanzmittel alle in derselben Richtung ausgerichtet. Beispielsweise sind die am vorderen Ende, angrenzend an die Stirnwand 24 angeordneten Abstützblöcke 50 alle in derselben Richtung ausgerichtet, in Figur 9 konkret nach links. Dadurch liegen die Abstützblöcke 50 eines Gehäuses gegenüber den freiliegenden Abschnitten 52 des Seitenteils 20 des benachbarten Gehäuses. Die Gehäuse sind also eng nebeneinanderliegend angeordnet, da sich die Abstützblöcke in die gegenüberliegenden "Ausnehmungen" einfügen.

Werden die Gehäuse 10 dagegen gegensinnig angeordnet, also jedes zweite gegenüber der in Figur 9 gezeigten Ausrichtung gedreht, liegen die Abstützblöcke 50 eines Gehäuses gegenüber den Abstützblöcken 50 des benachbarten Gehäuses (siehe Figur 10). Die Abstützblöcke 50 führen also dazu, dass die Gehäuse insgesamt sich in einem größeren Abstand voneinander befinden.

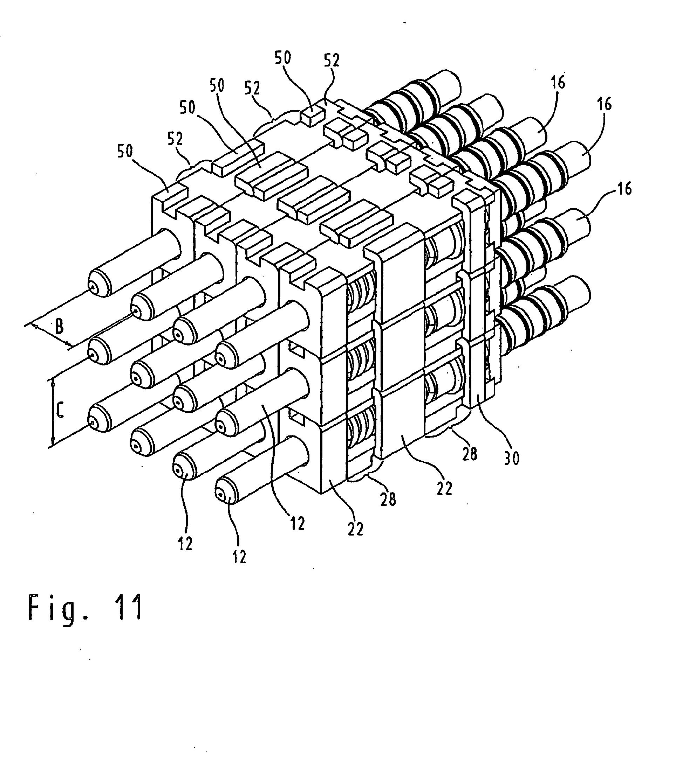

Wie in Figur 11 zu sehen ist, können die Gehäuse 10 nicht nur nebeneinanderliegend, sondern auch übereinanderliegend angeordnet werden. Dabei ergeben sich unterschiedliche Rastermaße. Bei der in Figur 11 gezeigten Anordnung sind die Gehäuse mit jeweils dem kleinsten Rastermaß kompakt geschichtet, also so, dass die Stege 22 in die Ausnehmungen 28 eingreifen und die Abstützblöcke 50 in die freiliegenden Abschnitte 52 der Seitenteile 20 eingreifen. Somit ergibt sich in einer Richtung, also hier in den Reihen ein Rastermaß B, während sich in der anderen Richtung, hier in Spaltenrichtung, das Rastermaß C ergibt. Wenn dagegen die Ausrichtung jedes zweiten Gehäuses geändert wird, also durch Drehung um die Mittelachse M der Lichtwellenleiter-Ferrule 12, ergeben sich abweichende Rastermaße.

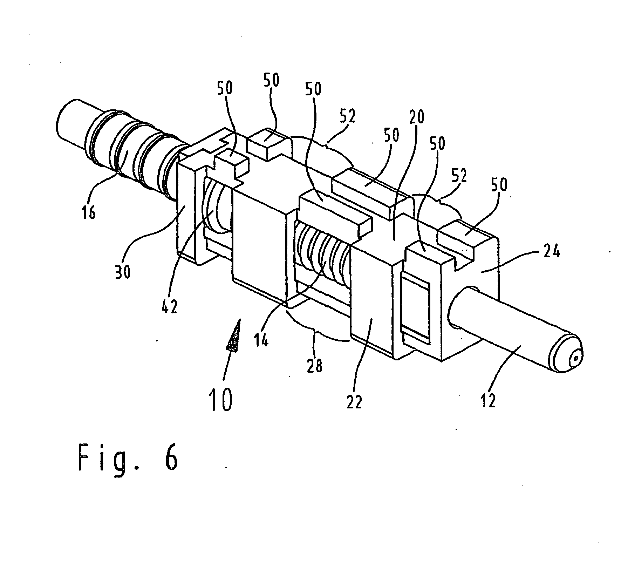

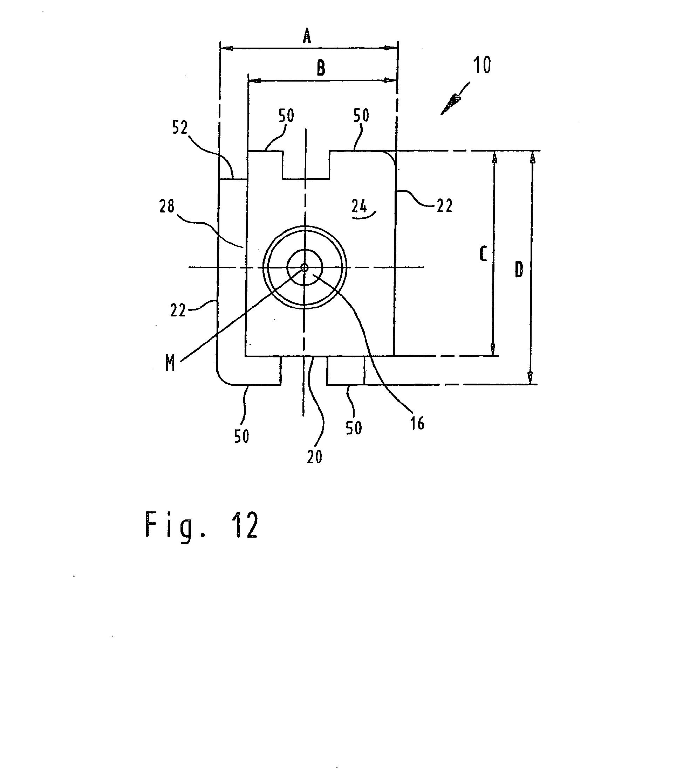

In Figur 12 ist schematisch ein Gehäuse gemäß der zweiten Ausführungsform in einer Vorderansicht gezeigt. Im Profil sind die beiden unterschiedlichen Distanzmittel deutlich zu erkennen, die für die jeweiligen Rastermaße bestimmend sind. Verallgemeinernd kann das Gehäuse als aus rechteckigen Abschnitten zusammengesetzt verstanden werden, wobei die Abschnitte abwechselnd gegeneinander verschoben sind. Der vorderste Abschnitt, der an die Stirnwand 24 angrenzt, ist bestimmt durch die obenliegenden Abstützblöcke 50, den auf der rechten Seite liegenden Steg 22, das auf der Unterseite angeordnete Seitenteil 20 und die auf der linken Seite angeordnete Ausnehmung 28. Dieser Abschnitt entspricht dem in Figur 6 sichtbaren, vordersten Abschnitt des Gehäuses. Daran schließt sich nach hinten ein Abschnitt an, der bezüglich des ersten Abschnittes nach schräg links unten versetzt ist. Dieser Abschnitt ist bestimmt durch den Steg 22 an der linken Seite, den an der Oberseite freiliegenden Abschnitt 52 des Seitenteils 20, die (in Figur 12 nicht sichtbare) Ausnehmung 28 auf der rechten Seite und die Abstützblöcke 50 auf der Unterseite. Hieran schließt sich nach hinten wiederum ein dritter Abschnitt an, dessen Profil mit dem ersten Abschnitt deckungsgleich ist. Auf den dritten Abschnitt folgt ein vierter Abschnitt, der mit dem zweiten Abschnitt deckungsgleich ist. Diese Gestaltung des Gehäuses ermöglicht es, durch Drehung um 90° in Umfangsrichtung ein anderes Rastermaß einzustellen.

## Patentansprüche

1. Gehäuse (10) für eine Lichtwellenleiter-Ferrule (12), wobei das Gehäuse eine Mittelachse parallel zu einer Längsachse M der Lichtwellenleiter-Ferrule aufweist, mit ersten Distanzmitteln (22, 28), die für den Abstand zwischen zwei benachbart angeordneten Gehäusen (10) bestimmend sind und durch Gestaltungen des Gehäuses (10) gebildet sind, die einander bezüglich der Mittelachse des Gehäuses (10) bzw. der Mittelachse M der im Gehäuse (10) angeordneten Lichtwellenleiter-Ferrule (12) gegenüberliegen, wobei die ersten Distanzmittel (22, 28) gebildet sind durch ein Paar von ersten Distanzmitteln eines ersten Typs (22) und eines zweiten Typs (28), der sich vom ersten Typ (22) unterscheidet, wobei
die ersten Distanzmittel des ersten Typs (22) einen größeren Abstand von der Längsachse (M) haben als die ersten Distanzmittel des zweiten Typs (28),
das Gehäuse mehrere Paare des ersten Distanzmittels (22, 28) aufweist, die abwechselnd ausgerichtet entlang der Längsachse (M) aufeinanderfolgen,
die ersten Distanzmittel (22, 28) eines Paares einander, bezogen auf die Mittelachse (M) des Gehäuses (10), in axialer Richtung gegenüberliegen, und wobei
in einer ersten Lage zwei benachbart angeordnete Gehäuse (10) so angeordnet werden können, dass sich jeweils erste Distanzmittel (22, 28) des ersten Typs (22) gegenüberliegen und den Abstand zwischen den Längsachsen der Lichtwellenleiter-Ferrulen (12) bestimmen und wobei
in einer zweiten Lage zwei benachbart angeordnete Gehäuse (10) so angeordnet werden können, dass jeweils erste Distanzmittel (22, 28) des ersten Typs (22) gegenüber ersten Distanzmitteln (22, 28) des zweiten Typs (28) liegen und den Abstand zwischen den Längsachsen der Lichtwellenleiter-Ferrulen (12) bestimmen.

2. Gehäuse nach Anspruch 1, **dadurch gekennzeichnet, dass** die ersten Distanzmittel (22, 28) des ersten Typs und des zweiten Typs gebildet sind durch Abschnitte (22, 28) des Gehäuses, die einen unterschiedlichen Abstand von der Mittelachse des Gehäuses haben.

3. Gehäuse nach einem der vorhergehenden Ansprüche, **dadurch gekennzeichnet, dass** die ersten Distanzmittel des ersten Typs durch eine Abstützfläche (22) und die ersten Distanzmittel des zweiten Typs durch eine Ausnehmung (28) gebildet sind.

4. Gehäuse nach einem der vorhergehenden Ansprüche, **dadurch gekennzeichnet, dass** die ersten Distanzmittel des ersten Typs gebildet sind durch einen Steg (22), der zwei Seitenteile (20) des Gehäuses (10) miteinander verbindet, und dass die ersten Distanzmittel des zweiten Typs gebildet sind durch eine Ausnehmung (28) zwischen zwei Stegen (22), welche die beiden Seitenteile (20) miteinander verbinden.

5. Gehäuse nach Anspruch 4, **dadurch gekennzeichnet, dass** auf den Seitenteilen (20) jeweils eine Längsrippe (32) vorgesehen ist.

6. Gehäuse nach einem der vorhergehenden Ansprüche, **dadurch gekennzeichnet, dass** zweite Distanzmittel (50, 52) vorgesehen sind, die bezüglich der Mittelachse (M) in Umfangsrichtung gegenüber den ersten Distanzmitteln (22, 28) versetzt sind, wobei die zweiten Distanzmittel gebildet sind durch ein Paar zweiter Distanzmittel eines ersten Typs (50) und eines zweiten Typs (52), der sich vom ersten Typ unterscheidet.

7. Gehäuse nach Anspruch 6, **dadurch gekennzeichnet, dass** die zweiten Distanzmittel des ersten Typs und des zweiten Typs gebildet sind durch Abschnitte (50, 52) des Gehäuses (10), die einen unterschiedlichen Abstand von der Mittelachse (M) des Gehäuses (10) haben.

8. Gehäuse nach Anspruch 6 oder Anspruch 7, **dadurch gekennzeichnet, dass** die zweiten Distanzmittel des ersten Typs (50) einen größeren Abstand von der Mittelachse (M) haben als die zweiten Distanzmittel des zweiten Typs (52).

9. Gehäuse nach einem der Ansprüche 6 bis 8, **dadurch gekennzeichnet, dass** es mehrere Paare des zweiten Distanzmittels (50, 52) aufweist, die abwechselnd ausgerichtet entlang der Längsachse (M) aufeinanderfolgen.

10. Gehäuse für eine Lichtwellenleiter-Ferrule, insbesondere nach einem der vorhergehenden Ansprüche, wobei das Gehäuse (10) eine allgemein rechteckige Form hat mit zwei Seitenteilen (20), die einander parallel gegenüberliegen und parallel zu der Lichtwellenleiter-Ferrule verlaufen und wobei das Gehäuse in Längsrichtung der Lichtwellenleiter-Ferrule betrachtet aus mehreren hintereinander angeordneten Abschnitten mit jeweils rechteckiger Gestalt gebildet ist, von denen jeder gegenüber dem jeweils davor bzw. dahinter angeordneten Abschnitt in einer Richtung versetzt ist, die im rechten Winkel zu den von den Seitenflächen (20) definierten Ebenen ausgerichtet ist.

11. Gehäuse nach einem der vorhergehenden Ansprüche, **dadurch gekennzeichnet, dass** es mit einem Verriegelungselement (16) versehen ist, das eine Lichtwellenleiter-Ferrule (12) und eine Druckfeder (14) im Gehäuse (10) verriegeln kann.

12. Gehäuse nach Anspruch 11, **dadurch gekennzeichnet, dass** das Verriegelungselement (16) mindestens einen Rastring (40, 42) aufweist, der hinter einem Steg des Gehäuses (10) einrasten kann.

13. Gehäuse nach Anspruch 12, **dadurch gekennzeichnet, dass** das Verriegelungselement zwei Rastringe (40, 42) aufweist, von denen einer hinter einem Steg (30) einrastet, der einer ersten Seitenfläche zugeordnet ist, und ein zweiter hinter einem Steg (30) einrastet, der einer an die erste Seitenfläche angrenzenden zweiten Seitenfläche zugeordnet ist.

14. Gehäuse nach einem der vorhergehenden Ansprüche, **dadurch gekennzeichnet, dass** das Gehäuse (10) aus Kunststoff besteht.

15. Steckergehäuse mit einer Aufnahme für mehrere Gehäuse nach einem der vorhergehenden Ansprüche, wobei die Gehäuse (10) in dem Steckergehäuse aneinander anliegend aufgenommen sind.

## Claims

1. A housing (10) for an optical waveguide ferrule (12), the housing having a center axis parallel to a longitudinal axis M of the optical waveguide ferrule, comprising first distance means (22, 28) which are determinative for the distance between two adjacently arranged housings (10) and are formed by formations of the housing (10) which are located opposite each other with respect to the center axis of the housing (10) or the center axis M of the optical waveguide ferrule (12) arranged in the housing (10), the first distance means (22, 28) being formed by a pair of first distance means of a first type (22) and a second type (28) which differs from the first type (22),
the first distance means of the first type (22) having a greater distance from the longitudinal axis (M) than the first distance means of the second type (28),
the housing including a plurality of pairs of the first distance means (22, 28) which succeed each other alternately oriented along the longitudinal axis (M),
the first distance means (22, 28) of a pair being located opposite each other in the axial direction, as related to the center axis (M) of the housing (10), and
in a first layer, two adjacently arranged housings (10) being adapted to be arranged such that first distance means (22, 28) of the first type (22) are each located opposite each other and determine the distance between the longitudinal axes of the optical waveguide ferrules (12), and
in a second layer, two adjacently arranged housings (10) being adapted to be arranged such that first distance means (22, 28) of the first type (22) are each located opposite first distance means (22, 28) of the second type (28) and determine the distance between the longitudinal axes of the optical waveguide ferrules (12).

2. The housing according to claim 1, **characterized in that** the first distance means (22, 28) of the first and second types are formed by sections (22, 28) of the housing which have different distances from the center axis of the housing.

3. The housing according to either of the preceding claims, **characterized in that** the first distance means of the first type are formed by a supporting surface (22) and the first distance means of the second type are formed by a recess (28).

4. The housing according to any of the preceding claims, **characterized in that** the first distance means of the first type are formed by a web (22) connecting two side pieces (20) of the housing (10) with each other, and **in that** the first distance means of the second type are formed by a recess (28) between two webs (22) connecting the two side pieces (20) with each other.

5. The housing according to claim 4, **characterized in that** the side pieces (20) each have a longitudinal rib (32) provided thereon.

6. The housing according to any of the preceding claims, **characterized in that** second distance means (50, 52) are provided which are offset from the first distance means (22, 28) in the peripheral direction with respect to the center axis (M), the second distance means being formed by a pair of second distance means of a first type (50) and a second type (52), which differs from the first type.

7. The housing according to claim 6, **characterized in that** the second distance means of the first and second types are formed by sections (50, 52) of the housing (10) which have different distances from the center axis (M) of the housing (10).

8. The housing according to claim 6 or claim 7, **characterized in that** the second distance means of the first type (50) have a greater distance from the center axis (M) than the second distance means of the second type (52).

9. The housing according to any of claims 6 to 8, **characterized in that** it includes a plurality of pairs of the second distance means (50, 52) which succeed each other alternately oriented along the longitudinal axis (M).

10. A housing for an optical waveguide ferrule, in particular according to any of the preceding claims, the housing (10) having a generally rectangular shape with two side pieces (20) which are located opposite and parallel to each other and extend parallel to the optical waveguide ferrule, and the housing, as viewed in the longitudinal direction of the optical waveguide ferrule, being formed of a plurality of sections each having a rectangular shape which are arranged one behind the other, each section being offset from the section respectively arranged in front of or behind it in a direction that is oriented at a right angle to the planes defined by the side faces (20).

11. The housing according to any of the preceding claims, **characterized in that** it is provided with a locking member (16) which is adapted to lock an optical waveguide ferrule (12) and a compression spring (14) inside the housing (10).

12. The housing according to claim 11, **characterized in that** the locking member (16) includes at least one latching ring (40, 42) which can snap into place behind a web of the housing (10).

13. The housing according to claim 12, **characterized in that** the locking member includes two latching rings (40, 42) one of which snaps into place behind a web (30) that is assigned to a first side face, and a second one of which snaps into place behind a web (30) that is assigned to a second side face adjacent to the first side face.

14. The housing according to any of the preceding claims, **characterized in that** the housing (10) is made of plastic.

15. A plug housing comprising a mount for a plurality of housings according to any of the preceding claims, the housings (10) being received in the plug housing so as to rest against each other.

## Revendications

1. Boîtier (10) pour un embout (12) de guide d'ondes optiques, le boîtier présentant un axe médian parallèle à un axe longitudinal M de l'embout de guide d'ondes optiques, présentant des premiers moyens d'écartement (22, 28) qui sont déterminants pour la distance entre deux boîtiers (10) agencés de manière adjacente et qui sont formés par des conformations du boîtier (10) qui sont opposées les unes aux autres par rapport à l'axe médian du boîtier (10) ou de l'axe médian M de l'embout (12) de guide d'ondes optiques agencé dans le boîtier (10), les premiers moyens d'écartement (22, 28) étant formés par un couple de premiers moyens d'écartement d'un premier type (22) et d'un deuxième type (28) qui est différent du premier type (22),
les premiers moyens d'écartement du premier type (22) présentant une plus grande distance de l'axe longitudinal (M) que les premiers moyens d'écartement du deuxième type (28),
le boîtier présentant plusieurs couples du premier moyen d'écartement (22, 28) qui se succèdent en alternance orientés le long de l'axe longitudinal (M),
les premiers moyens d'écartement (22, 28) d'un couple étant opposés les uns aux autres dans le sens axial par rapport à l'axe médian (M) du boîtier (10), et
deux boîtiers (10) agencés de manière adjacente étant apte à être agencés dans une première couche de manière à ce que des premiers moyens d'écartement (22, 28) respectifs du premier type (22) sont opposés les uns aux autres et déterminent la distance entre les axes longitudinaux des embouts (12) de guides d'ondes optiques, et
deux boîtiers (10) agencés de manière adjacente étant aptes à être agencés dans une deuxième couche de manière à ce que des premiers moyens d'écartement (22, 28) respectifs du premier type (22) sont opposés à des premiers moyens d'écartement (22, 28) du deuxième type (28) et déterminent la distance entre les axes longitudinaux des embouts (12) de guides d'ondes optiques.

2. Boîtier selon la revendication 1, **caractérisé en ce que** les premiers moyens d'écartement (22, 28) du premier type et du deuxième type sont formés par des tronçons (22, 28) du boîtier qui présentent différentes distances de l'axe médian du boîtier.

3. Boîtier selon l'une des revendications précédentes, **caractérisé en ce que** les premiers moyens d'écartement du premier type sont formés par une surface d'appui (22) et **en ce que** les premiers moyens d'écartement du deuxième type sont formés par un évidement (28).

4. Boîtier selon l'une des revendications précédentes, **caractérisé en ce que** les premiers moyens d'écartement du premier type sont formés par une barrette (22) reliant deux parties latérales (20) du boîtier (10) l'une à l'autre, et **en ce que** les premiers moyens d'écartement du deuxième type sont formés par un évidement (28) entre deux barrettes (22) reliant les deux parties latérales (20) l'une à l'autre.

5. Boîtier selon la revendication 4, **caractérisé en ce qu'**il est prévu une nervure longitudinale (32) sur chacune des parties latérales (20).

6. Boîtier selon l'une des revendications précédentes, **caractérisé en ce qu'**il est prévu des deuxièmes moyens d'écartement (50, 52) qui sont décalés par rapport aux premiers moyens d'écartement (22, 28) dans le sens périphérique par rapport à l'axe médian (M), les deuxièmes moyens d'écartement étant formés par un couple de deuxièmes moyens d'écartement d'un premier type (50) et d'un deuxième type (52) qui est différent du premier type.

7. Boîtier selon la revendication 6, **caractérisé en ce que** les deuxièmes moyens d'écartement du premier type et du deuxième type sont formés par des tronçons (50, 52) du boîtier (10) qui présentent différentes distances de l'axe médian (M) du boîtier (10).

8. Boîtier selon la revendication 6 ou 7, **caractérisé en ce que** les deuxièmes moyens d'écartement du premier type (50) présentent une plus grande distance de l'axe médian (M) que les deuxièmes moyens d'écartement du deuxième type (52).

9. Boîtier selon l'une des revendications 6 à 8, **caractérisé en ce qu'**il présente plusieurs couples du deuxième moyen d'écartement (50, 52) qui se succèdent en alternance orientés le long de l'axe longitudinal (M).

10. Boîtier pour un embout de guide d'ondes optiques, en particulier selon l'une des revendications précédentes, le boîtier (10) présentant une forme généralement rectangulaire avec deux parties latérales (20) opposées en étant parallèles l'une par rapport à l'autre et s'étendant parallèlement à l'embout de guide d'ondes optiques, et le boîtier étant composé, vu dans le sens longitudinal de l'embout de guide d'ondes optiques, de plusieurs tronçons agencés les uns derrière les autres et présentant chacun une forme rectangulaire, dont chacun, par rapport au tronçon agencé respectivement devant ou derrière, est décalé dans un sens orienté selon un angle droit par rapport aux plans définis par les faces latérales (20).

11. Boîtier selon l'une des revendications précédentes, **caractérisé en ce qu'**il est pourvu d'un élément de verrouillage (16) apte à verrouiller un embout (12) de guide d'ondes optiques et un ressort de pression (14) dans le boîtier (10).

12. Boîtier selon la revendication 11, **caractérisé en ce que** l'élément de verrouillage (16) présente au moins un anneau d'enclenchement (40, 42) apte à s'enclencher derrière une barrette du boîtier (10).

13. Boîtier selon la revendication 12, **caractérisé en ce que** l'élément de verrouillage présente deux anneaux d'enclenchement (40, 42) dont l'un s'enclenche derrière une barrette (30) associée à une première face latérale, et un deuxième s'enclenche derrière une barrette (30) associée à une deuxième face latérale adjacente à la première face latérale.

14. Boîtier selon l'une des revendications précédentes, **caractérisé en ce que** le boîtier (10) est réalisé en plastique.

15. Boîtier de connecteur présentant un logement pour plusieurs boîtiers selon l'une des revendications précédentes, les boîtiers (10) étant reçus dans le boîtier de connecteur en reposant les uns contre les autres.
